# EUROPÄISCHE PATENTSCHRIFT

(11) **EP 3 086 737 B1**
(45) Veröffentlichungstag und Bekanntmachung des Hinweises auf die Patenterteilung: **18.11.2020**
(21) Anmeldenummer: 14814845.5
(22) Anmeldetag: 16.12.2014
(51) Int. Cl.: A61C 8/00

(54) **ZAHNPROTHETISCHE ANORDNUNG**
DENTAL PROSTHESIS ARRANGEMENT
ENSEMBLE FORMANT PROTHÈSE DENTAIRE

(30) Priorität: 23.12.2013 DE 102013114779
(43) Veröffentlichungstag der Anmeldung: 02.11.2016
(73) Patentinhaber: BREDENT GMBH & CO. KG, 89250 Senden (DE)
(72) Erfinder: BREHM, Peter, 89250 Senden (DE)
(74) Vertreter: Baur & Weber Patentanwälte PartG mbB
(86) Internationale Anmeldenummer: PCT/EP2014/078054
(87) Internationale Veröffentlichungsnummer: WO 2015/097024

(56) Entgegenhaltungen:
- WO-A1-02/24104
- DE-A1-102004 044 888
- US-A- 5 997 299
- US-B1- 6 663 388

## Beschreibung

Die Erfindung betrifft eine zahnprothetische Anordnung.

Bekanntlich werden Zahnprothesen verwendet, um fehlende Zähne eines Gebisses zu ersetzen. Dabei kommen zahnprothetische Anordnungen zum Einsatz, die über ein im Kieferknochen verankertes Kieferimplantat einen Aufbau aufweisen. Für den Einsatz mehrerer benachbarter oder auch aller Zähne eines Kiefers kann vorteilhafterweise ein zusammenhängender Aufbau über mehrere Kieferimplantate vorgesehen sein.

Aus dem allgemeinen Stand der Technik ist es bekannt, die Befestigung eines zahnprothetischen Aufbaus auf einem Kieferimplantat mittels Zement durchzuführen. Eine derartige Befestigung führt zu einem festsitzenden Zahnersatz. Die Zementierung erweist sich jedoch als nachteilig, da insbesondere eine parodontale Reinigung des Zahnersatzes nur unter großen Schwierigkeiten oder gar nicht durchführbar ist. Hierbei ist insbesondere zu beachten, dass die Bildung von sogenannten Biofilmen auf harten Oberflächen, wie beispielsweise an Implantaten, in der Mundhöhle eines Prothesenträgers unvermeidbar ist. Die in dem Biofilm enthaltenen Bakterien sind häufig Auslöser von Infektionserkrankungen, die in letzter Zeit zunehmend in den Fokus der medizinischen und zahnmedizinischen Forschung geraten sind. So hat es sich gezeigt, dass etwa 60 % bis 70 % aller Infektionserkrankungen des menschlichen Körpers biofilmassoziiert sind. Erschwerend kommt hinzu, dass sich Biofilmbakterien zu dem außerhalb der Reichweite der Immunabwehr des menschlichen Körpers befinden, sowie häufig problemlos auf andere Individuen in Form pathogener Keime übertragen werden können. Ähnlich wie bei parodontalen Taschen der natürlichen Zähne ist auch bei periimplantären Taschen eine prophylaktische Betreuung erforderlich.

Periimplantäre Entzündungen entwickeln sich auf der gleichen Basis wie parodontale Entzündungen. So weisen Implantate bereits innerhalb von zwei Wochen nach ihrer Freilegung subgingivale Biofilme auf. Die darin nachgewiesenen Mikroorganismen weisen sogar zum Teil ein höheres pathologisches Potential als die auf den Wurzeloberflächen vorhandenen Biofilme auf. Es hat sich heraus gestellt, dass diese pathologischen Keime eine hohe Bindungsaffinität zu Titan aufweisen, das häufig bei der Herstellung von Implantaten eingesetzt wird. Studien haben gezeigt, dass über die Hälfte aller Implantate mit Keimen besiedelt sind. Subgingivale Biofilme stellen folglich ein mikrobielles Depot mit hoher infektiöser und antigener Potenz dar und penetrieren durch die permeablen parodontalen oder periimplantären Saumepithelien ins Gewebe und gelangen in den Kreislauf.

Um die mit diesen Keimen verbundenen Krankheitsrisiken, wie z. B. Herzkreislauferkrankungen, Arteriosklerose, Diabetes oder Krebserkrankungen, weiter zu reduzieren bzw. zu verhindern ist ein mechanisches Abtragen des Biofilms auch bei Trägern von Zahnersatz unabdingbar. Der Ersatz parodontal vorgeschädigter Zähne durch osseointegrierte Implantate erfordert zur Kontrolle der am Implantat aufwachsenden Biofilme eine regelmäßige Nachbetreuung. Dies ist jedoch bei alten Menschen, die häufig an Begleitumständen wie Demenzerkrankungen und körperlichen Gebrechen leiden, häufig nicht durchführbar. Folglich muss der implantatgetragene Zahnersatz an diese Veränderungen angepasst werden.

Es ist daher erforderlich, insbesondere unter Berücksichtigung der demografischen Entwicklung der Gesellschaft zahnprothetische Anordnungen dahingehend anzupassen, dass anstelle festsitzender Zahnprothesen herausnehmbare oder bedingt herausnehmbare Zahnprothesen bereit gestellt werden.

Um ohne Beschädigung oder Zerstörung den zahnprothetischen Aufbau abnehmen zu können, sind verschiedene Systeme zur lösbaren Befestigung einer Prothese auf einem Unterbau mit einem oder mehreren Kieferimplantaten bekannt. Dabei wird, wie bereits erwähnt, eine nur von einem Behandler, gegebenenfalls unter Verwendung eines Werkzeugs, abnehmbare Prothese als bedingt abnehmbar und eine auch vom Träger der Prothese selbst werkzeuglos lösbare und wieder einsetzbare Prothese als abnehmbar bezeichnet. Solche bedingt abnehmbaren oder abnehmbaren Prothesen vermeiden zugleich die genannten Probleme der Zementierung.

In der US 6 299 447 B1 ist eine Verbindungsart in Form von Druckknöpfen beschrieben, bei welcher in eine Prothese eine zum Kiefer hin offene Kappe eingegossen ist und auf dem Kieferimplantat ein am oberen Ende mit einem radialen Wulst pollerartig erweiterter Pfosten vom Kiefer weg ragt. Unter Zwischenfügen eines Ringes mit radial konvex gewölbter Wand kann die Kappe reversibel auf den Poller aufgeschnappt und von diesem unter Überwinden einer Haltekraft abgezogen werden. Solche Anordnungen sind insbesondere für Vollprothesen von Vorteil und sind auch durch den Träger der Prothese entnehmbar und wieder einsetzbar.

In der US 5 667 384 ist eine zahnprothetische Anordnung beschrieben, bei welcher auf einem Implantat eine Kopfschraube fest aufgeschraubt ist. Eine Aussparung in der Kappe einer abnehmbaren Prothese übergreift die Kopfschraube und eine im wesentlichen radial durch die Kappe führende Befestigungsschraube stützt sich mit einer konischen Fläche unten am Schraubenkopf ab und drückt die Kappe in Richtung des Kieferimplantats, wo sich Prothese und Implantat an einer konischen Dichtfläche gegeneinander abstützen. Die Befestigungsschraube zieht zugleich die gegenüber liegende Innenwand seitlich gegen den Schraubenkopf. Anstelle einer Kopfschraube als Teil eines mehrteiligen Implantats und als Gegenfläche zur Konusfläche der Befestigungsschraube kann auch eine auf dem Kieferimplantat befestigte Hülse mit konischer Außenwand, die mit einer konischen Innenwand der Kappe eine Anlagefläche bildet und mit einer umlaufenden Nut eine Gegenfläche zu der Befestigungsschraube bilden. Durch Lösen der Befestigungsschraube in einer Arztpraxis kann die Prothese vom Kiefer abgenommen werden, was als bedingt abnehmbar bezeichnet wird.

In der DE 10 2004 051 437 A1 ist eine Doppelkrone beschrieben, bei welcher eine Primärkrone eine zylindrische Außenfläche besitzt und eine Sekundärkrone mit einer passend ausgeformten zylindrischen Aussparung über die Primärkrone aufschiebbar ist. Die Primärkrone weist eine horizontale Rille in ihrer Zylindermantelfläche auf, in welche ein elastischer Stift der Sekundärkrone eingreift und die Sekundärkrone gegen Abziehen von der Primärkrone mit einer Haltekraft sichert, welche zum Abziehen der Primärkrone überwunden werden muss.

Aus der US 2 866 285 A ist eine Vorrichtung zur lösbaren Verbindung eines künstlichen Zahns bekannt. Dabei wird ein zylindrischer Teilbereich einer Einsenkung im Inneren einer hohlförmigen Kappe axial benachbart und mit einem kleineren Durchmesser bezüglich eines koaxialen Zylinderteils ausgeführt, wobei der koaxiale Zylinderteil auf einer Innenfläche gebildet wird. Der koaxiale Zylinderteil ist mit einem Flansch verbunden, der als Anschlag bezüglich der Kappe dient. Während des Aufbringens der Kappe wird ein ringförmiges Element in eine Furche gepresst, so dass gleichzeitig die Kappe gegen den Flansch gepresst wird.

In der DE 10 2004 044 888 A1 ist eine zahnprothetische Anordnung mit einer transversalen Verschraubung gezeigt, in der die Möglichkeit gegeben ist, ein Aufbauelement durch ein Feststellelement reversibel zu fixieren.

In der US 5 997 299 A wird ein dentalprothetischer Aufbau gezeigt, der im Wesentlichen aus folgenden Baugruppen besteht: Adapter mit Verschraubungselement und Fixierungselement, Verbindungsstift, Unterteil, Oberteil und Abschluss. Der Adapter wird über ein Gewinde mit einer in den Kiefer eingelassenen Prothese verschraubt. Der Adapter besitzt eine seitliche Öffnung, mit welcher ein Gelenkstift am Adapter fixiert werden kann. Auf den Gelenkstift können anschließend einzelne Zahnersatzelemente oder bei mehr als einem Adapter ganze Brücken aufgebracht werden. Die Brücken oder Zahnersatzelemente werden anschließend durch eine Abschlusskappe verschlossen.

In der WO 02/24104 A1 wird eine Verbindung zwischen einem Implantat und einer Prothese gezeigt. Die Prothese sitzt hierbei auf einem nach unten geöffneten Hohlkörper, dessen passgenauer Gegenkörper auf dem Implantat verschraubt wird. Der Gegenkörper beinhaltet einen elastischen Mechanismus, der beispielsweise aus einer Feder bestehen kann, und drückt beim Aufsetzen des äußeren Hohlkörpers ein Haltemittel in eine Nut des äußeren Hohlkörpers. Somit wird der äußere Hohlkörper durch eine elastisch deformierbare Halterung auf dem innenliegenden Gegenkörper fixiert.

Die US 6 663 388 B1 zeigt eine Verbindung zwischen einem Implantat und einem Abutment. Das Abutment wird hierbei durch eine Schraube mit dem Implantat verbunden, wobei um einen festen Halt zu garantieren im Inneren des Abutments ein angewinkelter Hohlzylinder eingebracht ist, welcher die Passform zwischen Abutment und Implantat sicherstellt.

Der vorliegenden Erfindung liegt die Aufgabe zugrunde, eine zahnprothetische Anordnung mit einer reversibel abnehmbaren oder bedingt abnehmbaren Prothese über einem oder mehreren Kieferimplantaten anzugeben.

Diese Aufgabe wird durch die Merkmale des unabhängigen Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine zahnprothetische Anordnung zur Verbindung von wenigstens einem Kieferimplantat mit einem Aufbau, die in einem Verbindungsabschnitt über ein dem Kieferimplantat zugeordnetes Unterteil und ein dem Aufbau zugeordnetes Oberteil miteinander verbunden sind, geschaffen. Das Unterteil greift in dem Verbindungsabschnitt entlang einer Mittelachse in das Oberteil ein. Das Unterteil ist an mehreren Anlageflächen gegen das Oberteil abgestützt. Das Unterteil und das Oberteil sind miteinander über ein eine Haltekraft gegen axiales Abziehen des Oberteils vom Unterteil bewirkendes Befestigungsmittel lösbar verbunden, wobei unterschiedliche Befestigungsmittel auswählbar sind, indem am Unterteil eine erste radial nach innen gerichtete Struktur und am Oberteil eine zweite radial nach außen gerichtete Struktur zur Aufnahme eines Halteelements vorgesehen sind und durch wenigstens ein weiteres das Oberteil durchdringendes und mit dem Unterteil in Verbindung stehendes Element fixierbar ist.

Für das weitere Element kann am Oberteil eine erste Öffnung zur Aufnahme einer transversalen Verschraubung und/oder am Oberteil eine zweite Öffnung zur Aufnahme eines Riegelelements vorgesehen sein.

Demgemäß wird eine zahnprothetische Anordnung bereit gestellt, bei der eine lösbare Befestigung zwischen einem Unterteil und einem Oberteil möglich ist. Das Unterteil kann dabei in ein Kieferimplantat eingeführt sein und das Oberteil einem Aufbau, beispielsweise einer zahnprothetischen Anordnung zugeordnet sein. Im Gegensatz zu dem aus dem Stand der Technik bekannten lösbaren Verbindungsstrukturen wird gemäß der Erfindung ein Befestigungsmittel bereitgestellt, bei dem unterschiedliche Arten der Befestigung ausgewählt werden können. Dies ermöglicht es, eine Vielzahl unterschiedlicher zahnprothetischer Anordnungen zu schaffen, die auf unterschiedliche Weise für eine lösbare Verbindung sorgen, ohne dabei für jeden Verbindungstyp eine eigene Verbindungsstruktur schaffen zu müssen. Demnach ist als erste Befestigungsmöglichkeit vorgesehen, zwei gegenüber liegende Strukturen zu schaffen, zwischen denen ein Halteelement vorgesehen sein kann. Der erste Verbindungstyp bezieht sich somit auf eine Befestigungsmöglichkeit, die im Inneren zwischen dem Oberteil und dem Unterteil geschaffen wird. Als zweite Befestigungsmöglichkeit ist eine transversale Verschraubung vorgesehen, die durch eine erste Öffnung am Oberteil vorgenommen wird. Die dritte Befestigungsmöglichkeit umfasst ein Riegelelement, das am Oberteil durch eine zweite Öffnung ragen kann. Da bei dem erfindungsgemäßen Aufbau bereits sämtliche Strukturen bzw. Öffnungen vorgesehen sind, kann je nach Anwendungsfall eine der genannten Befestigungsmöglichkeiten ausgewählt werden. Die anderen, im entsprechenden Anwendungsfall nicht vorgesehenen Befestigungsmöglichkeiten können beispielsweise mittels eines Klebers oder ähnlichem verschlossen werden, sofern sie an der Außenseite des Oberteils in Form von Öffnungen angeordnet sind. Die im Inneren, zwischen dem Oberteil und dem Unterteil angeordneten Strukturen können auch ohne Halteelement dort verbleiben. Gemäß der Erfindung wird folglich ein flexibles, universal einsetzbares Befestigungsmittel geschaffen, das vorteilhaft bei der zahnprothetischen Anordnung zur lösbaren Verbindung zwischen Aufbau und Kieferimplantat herangezogen werden kann.
Gemäß einer Ausführungsform der Erfindung sind die erste Struktur als ringförmige Nut, die zweite Struktur als Aussparung und das Halteelement als elastisch verformbarer Ring ausgebildet.

Die Verbindung zwischen dem Oberteil und dem Unterteil wird hier durch einen Ring gebildet, der sowohl in die ringförmige Nut als auch in die Aussparung eingreifen kann. Aufgrund der elastischen Verformbarkeit ist des Rings ist es somit möglich, die beiden Teile zusammen zu fügen, um einen Sitz des Aufbaus auf dem Kieferimplantat zu erreichen.

Gemäß einer weiteren Ausführungsform der Erfindung umfasst der Ring ein gummielastisches und/oder elastisch komprimierbares Material und ist radial elastisch verformbar.

Demgemäß können in einem zahnprothetischen System mit einer solchen zahnprothetischen Anordnung beispielsweise mehrere unterschiedliche Halteelemente vorgesehen sein, die so ausgelegt sind, dass sie bei sonst gleichen Eigenschaften unterschiedliche Haltekräfte bewirken. Die unterschiedlichen Halteelemente können sich beispielsweise im Querschnitt und/oder Material, beispielsweise Elastomermaterial unterschiedliche Shore-Härte unterscheiden. Bei abnehmbaren Prothesen kann durch die Auswahl eines entsprechenden Halteelements eine für den jeweiligen Benutzer angemessene Haltekraft eingestellt werden.

Gemäß einer weiteren Ausführungsform der Erfindung umfasst das Riegelelement einen stiftförmigen Abschnitt, der in einer Eingriffsstellung mit einer Riegelspitze in die Nut des Unterteils eingreift oder tangential bezüglich der Mittelachse des Unterteils in der Nut verläuft.

Demgemäß wird ein Befestigungsmittel geschaffen, das sowohl für den Benutzer oder auch einen Behandler zugänglich ist und manuell oder mittels Werkzeug betätigbar ist. Dabei kann das Befestigungsmittel als Riegelelement ausgebildet sein, das insbesondere als Steckriegel für einen Halt zwischen Oberteil und Unterteil sorgt. Eine bügelförmige Verriegelung ist ebenfalls möglich.

Das Riegelelement kann als Steckriegel, Schubriegel, Schwenkriegel, Drehriegel oder U-förmige Bügelverriegelung ausgebildet sein.

Federnde Steckriegel erlauben es insbesondere dem Träger der zahnprothetischen Anordnung eine selbständige Herausnahme durchzuführen und das Rückstellmittel sorgt dabei für einen zuverlässigen Halt während des Tragens.

Gemäß einer weiteren Ausführungsform der Erfindung ist die erste Öffnung zylindrisch ausgebildet und mit einem Innengewinde versehen, in die eine ein Außengewinde aufweisende Schraube zur Bildung der transversalen Verschraubung einführbar ist.

Demgemäß ist es möglich, die erfindungsgemäße zahnprothetische Anordnung auch mittels einer an sich aus dem Stand der Technik bekannten transversalen Verschraubung zu versehen.

Gemäß einer weiteren Ausführungsform der Erfindung ist das Oberteil an seiner von dem Kieferimplantat weg weisenden Oberseite geschlossen.

Demnach ist die Oberseite in Form einer Kappe ausgeführt, auf die nachfolgend die Zahnprothetik aufgebracht werden kann.

Gemäß einer weiteren Ausführungsform der Erfindung ist das Oberteil an seiner von dem Kieferimplantat weg weisenden Oberseite mit einer dritten Öffnung zur Aufnahme einer okklusalen Verschraubung versehen.

In dieser Alternative wird das Oberteil nicht als Kappe ausgeführt, sondern ist nach oben hin offen. Durch diese Öffnung kann in axialer Richtung eine Schraube eingeführt werden, die es ermöglicht, Oberteil und Unterteil miteinander zu verbinden. Demnach ist es jedoch nach Aufbringen der Prothetik notwendig, die Durchtrittsöffnung der Schraube mittels eines geeigneten Verschlussmaterials zu verschließen, so dass zur Entnahme der zahnprothetischen Anordnung eine Entfernung des Verschlussmaterials notwendig ist.

Gemäß einer weiteren Ausführungsform der Erfindung ist die dritte Öffnung von einer zylindrischen Fortsetzung umgeben, die von dem Kieferimplantat weg weist.

Die zylindrische Fortsetzung kann als Aufbauelement für die nachfolgende Zahnprothetik herangezogen werden.

Gemäß einer weiteren Ausführungsform ist die zylindrische Fortsetzung in Richtung der Mittelachse ausgebildet.

Nach dieser Ausführungsform erfolgt eine gerade Konstruktion des Oberteils, auf das die Zahnprothetik aufgesetzt wird.

Gemäß einer weiteren Ausführungsform ist die zylindrische Fortsetzung zur Mittelachse gewinkelt.

Demnach ist es möglich, die Durchtrittsöffnung für die okklusale Verschraubung an einer Stelle der Zahnprothese vorzusehen, die beispielsweise keine hohe mechanische Belastung, insbesondere durch Kaukräfte beim Tragen aufweist. Durch Auswahl der entsprechenden Abwinklung bzw. Positionierung der abgewinkelten zylindrischen Fortsetzung ist demnach eine nahezu beliebige Variation in der Lage der Durchtrittsöffnung möglich.

Gemäß einer weiteren Ausführungsform sind die zylindrische Fortsetzung und das Oberteil einstückig ausgeführt oder sind verschweißbar.

Insbesondere bei gewinkelten zylindrischen Fortsetzungen kann die Verbindung mit dem Oberteil nebst Schraube über eine Verschweißung erfolgen. Demnach ist es nicht notwendig, beispielsweise einen ausgedehnten Hohlraum über der nach unten ragenden Mittelachse vorzusehen, um die okklusale Verschraubung herstellen zu können. Demnach wird eine zahnprothetische Anordnung geschaffen, die eine kompakte Form aufweist.

Gemäß einer weiteren Ausführungsform der Erfindung bewirken das Halteelement, das Riegelelement und die transversale Verschraubung sowie die okklusale Verschraubung eine axiale Andruckkraft an einer Anlagefläche an dem dem Kieferimplantat zuweisenden Ende des Verbindungsabschnitts.

Durch die axiale Andruckkraft wird insbesondere verhindert, dass sich Lücken zwischen dem Oberteil und dem Unterteil bilden können, wobei Verunreinigungen in dieser Lücke nur schwer beseitigbar sind. Demnach wird aufgrund der axialen Andruckkraft eine hermetische Versiegelung zwischen Oberteil und Unterteil erreicht.

Es ist möglich, die Haltekraft ohne Zerstörung von Oberteil und Unterteil zu überwinden, um die Verbindung zwischen Oberteil und Unterteil zu lösen.

Demnach müssen die Halteelemente für die Bereitstellung der Verbindung zwischen Oberteil und Unterteil entsprechend gewählt werden. Zusätzlich ist es auch vorgesehen, dass die Haltekraft ohne Zerstörung des Halteelements überwindbar ist.

Nachfolgend werden einige Ausführungsbeispiele anhand der Zeichnung näher erläutert. Es zeigen:
- Fig. 1: eine teilweise geschnittene Seitenansicht einer ersten Ausführungsform einer erfindungsgemäßen zahnprothetischen Anordnung,
- Fig. 2: eine weitere Seitenansicht der zahnprothetischen Anordnung gemäß Fig. 1,
- Fig. 3: eine weitere Seitenansicht der Ausführungsform gemäß Fig. 1,
- Fig. 4 (A): eine weitere Seitenansicht gemäß der Ausführungsform nach Fig. 1,
- Fig. 4 (B): eine teilweise geschnittene Draufsicht der Ausführungsform nach Fig. 4 (A),
- Fig. 5: eine weitere Seitenansicht der Ausführungsform gemäß Fig. 1, und
- Fig. 6: eine teilweise geschnittene Seitenansicht einer weiteren Ausführungsform.

In den Figuren sind gleiche oder funktional gleichwirkende Bauteile mit den gleichen Bezugszeichen versehen.

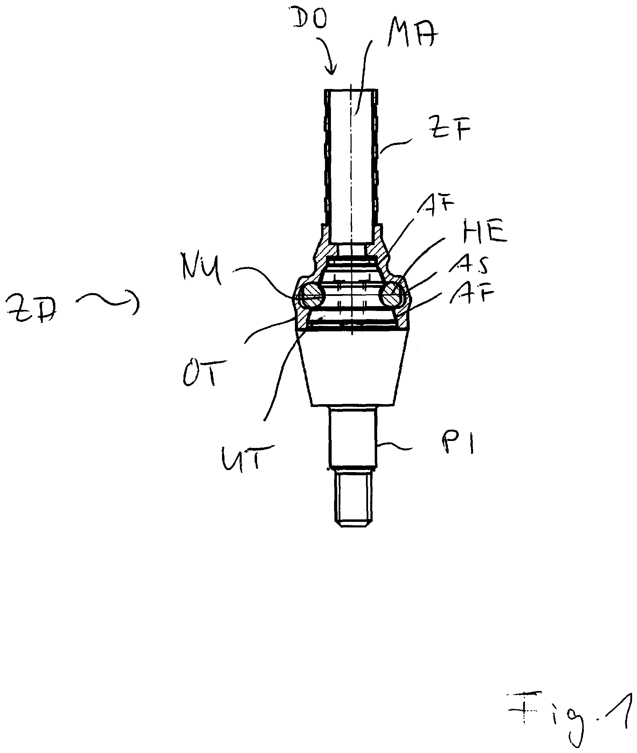

In Fig. 1 ist schematisch eine erste Ausführungsform der erfindungsgemäßen zahnprothetischen Anordnung ZA in einer teilweise geschnittenen Seitendarstellung gezeigt. Auf einem schematisch mit dem Bezugszeichen PI gekennzeichneten Kieferimplantat ist ein Unterteil UT angebracht, das von einem Oberteil OT bedeckt wird. Das Oberteil OT kann als Aufbaukörper für eine in Fig. 1 nicht gezeigte Zahnprothese herangezogen werden. Das Oberteil OT und das Unterteil UT bilden zusammen einen Verbindungsabschnitt VA, so dass das dem Kieferimplantat PI zugeordnete Unterteil und das dem Aufbau zugeordnete Oberteil miteinander verbunden sind. Das Unterteil UT greift entlang einer Mittelachse MA in das Oberteil OT ein. Das Unterteil UT ist an mehreren Anlageflächen AF gegen das Oberteil OT abgestützt. Das Unterteil UT und das Oberteil OT sind miteinander über ein eine Haltekraft gegen axiales Abziehen des Oberteils OT vom Unterteil UT bewirkendes Befestigungsmittel lösbar verbunden.

Gemäß der Erfindung sind mehrere unterschiedliche Befestigungsmittel auswählbar, die nachfolgend unter Bezugnahme auf die unterschiedlichen nachfolgenden Ausführungsformen erläutert werden wird. In Fig. 1 ist der Einfachheit halber lediglich eine Ausführung des Befestigungsmittels gezeigt. In dem in Fig. 1 gezeigten Beispiel ist das Befestigungsmittel mittels einer ersten Struktur am Unterteil UT und einer zweiten Struktur am Oberteil OT gebildet, die gemeinsam ein Halteelement HE aufnehmen. Die erste Struktur ist am Unterteil UT radial nach innen gerichtet und in Form einer Nut NU ausgebildet. Die zweite Struktur ist am Oberteil OT radial nach außen gerichtet und in Form einer Aussparung AS ausgebildet. In dem zwischen der Nut NU und der Aussparung AS geschaffenen Hohlraum wird somit Platz geschaffen, das Halteelement HE aufzunehmen. Die Aussparung AS bzw. die Nut NU sind vorteilhaft entlang des kompletten Umfangs am Unterteil UT bzw. am Oberteil OT ausgebildet. Demnach ist es möglich, das Halteelement HE in Form eines Rings auszubilden, wobei jedoch nicht ausgeschlossen ist, die entsprechenden Strukturen lediglich teilweise an der Innen- bzw. Außenseite des Unter- oder Oberteils auszuführen.

Der Ring als Halteelement HE umfasst vorteilhafterweise ein elastisches bzw. elastisch komprimierbares Material und sollte radial elastisch verformbar sein, so dass der Ring über das Unterteil UT in die Nut Nu gestülpt werden kann. Das Oberteil OT würde dann beim Zusammenbau über den elastisch verformbaren Ring als Halteelement HE geführt werden, so dass aufgrund der Verformung des Rings eine zuverlässige Fixierung des Unterteils UT mit dem Oberteil OT erfolgt. Die Haltekraft durch da Halteelement HE kann dabei ohne Zerstörung von Oberteil OT und Unterteil UT überwindbar sein, um die Verbindung zwischen Oberteil OT und Unterteil UT zu lösen. Es ist auch vorgesehen, dass die Haltekraft ohne Zerstörung des Halteelements HE selbst überwindbar ist.

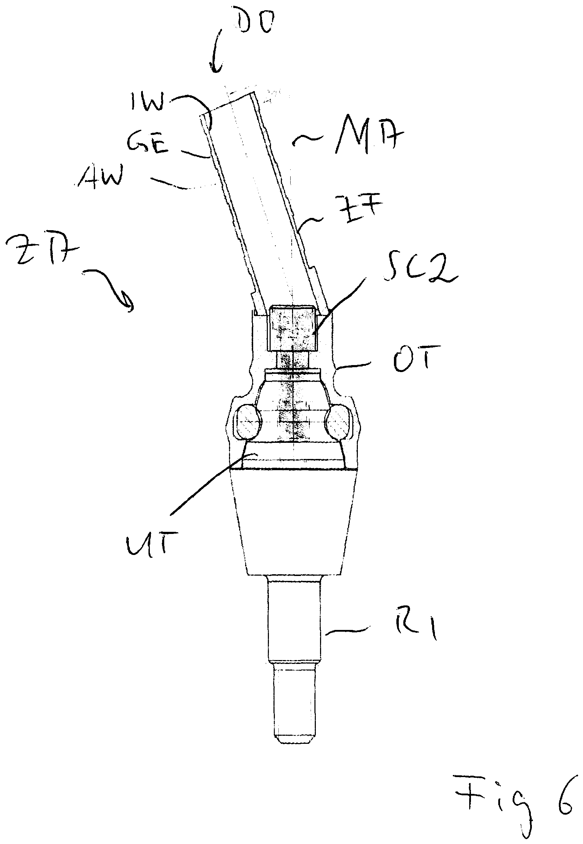

Der in den Nuten NO und NU im zusammen gefügten Zustand einliegenden und die Haltekraft gegen Abziehen bewirkende Haltering HR als Halteelement kann insbesondere aus einem Kunststoff, worunter auch ein Elastomer oder ein Gummimaterial verstanden sei, bestehen. Vorzugsweise weist die Nut NO im Oberteil eine größere radiale Tiefe gegenüber der annähernd konischen Fläche KO auf als die Nut NU gegenüber der konischen Fläche KU. Der Haltering HR liegt dann im Zustand der zahnprothetischen Anordnung mit vom Unterteil gelöstem Oberteil wie in Fig. 6 dargestellt vorteilhafterweise in der Nut NO des Oberteils ein und kann hierdurch außerhalb des Mundes des Prothesenträgers erforderlichenfalls gewechselt werden, um beispielsweise bei Verschleiß des Halterings HR nach mehrmaligem reversiblem Aufsetzen und Lösen des Prothesenkörpers von den Implantaten einen neuen Haltering einsetzen zu können oder um zum Ausprobieren einer dem Benutzer angemessenen Haltekraft nacheinander einen Vergleich mit unterschiedlichen Halteringen durchzuführen.

Die durch den Ring als Haltelement HE in den vorangegangenen Beispielen bewirkte Haltekraft kann sowohl in einem Bereich für eine abnehmbare Prothese mit häufigerem Einsetzen und Entnehmen durch den Benutzer selbst als auch für eine bedingt abnehmbare Prothese mit typischerweise höherer Haltekraft ausgelegt sein.

Der Ring als Haltelement HE kann typischerweise durch Gestaltung seines Schnurquerschnitts und/oder Materials in Verbindung mit den Querschnitten der Nut NU und der Aussparung AS auch für eine dauerhafte Verwindung von Oberteil OT und Unterteil UT ausgebildet sein, wofür auch vorgesehen sein kann, dass die Verbindung zwar in einer Zahnarztpraxis gelöst werden kann, hierbei aber der Ring eventuell zerstört wird.

Es ist auch möglich den Ring als Haltelement HE mit unrunden Schnurquerschnitten auszubilden, wobei ein der Ring beispielsweise einen V-förmigen Schnurquerschnitt mit zwei Schenkeln aufweisen kann, welche beim Aufsetzen des Oberteils OT auf das Unterteil UT elastisch aufeinander zu gedrückt und bei Erreichen der Nut NU selbsttätig wieder auseinander gedrückt werden. Ein Lösen der Verbindung des Oberteils OT vom Unterteil UT hat in dieser Variante zur Folge, dass ein Abnehmen nur mit erhöhter Kraft und typischerweise unter Zerstörung des Rings als Haltelement HE erfolgen kann. Der Schnurquerschnitt des Halterings RP muss nicht über den gesamten Umfang gleichbleibend sein, sondern kann auch nur auf mehreren Umfangsabschnitten vorliegen.
Eine weitere Variante beinhaltet einen keilförmigen Schnurquerschnitt eines des Rings als Haltelement HE, bei welchem eine Keilspitze vom kieferseitigen Ende des Implantats abgewandt angeordnet ist und hierdurch eine erhöhte Haltekraft gegen Abziehen des Oberteils KO vom Unterteil UT gegeben ist. Je nach Ausbildung des Schnurquerschnitts und Wahl des Materials des Halterings RK im Einzelnen kann ein Abheben des Oberteils KO vom Unterteil UT unter Zerstörung des Rings als Haltelement HE oder unter dessen Erhalt erfolgen.

Die Schnurquerschnitte des Rings als Haltelement HE bewirken insbesondere vorteilhafterweise eine Asymmetrie der Kräfte zwischen Aufstecken des Oberteils UT auf das Unterteil UT und Abziehen des Oberteils OT von dem Unterteil UT in Richtung der Mittelachse MA.

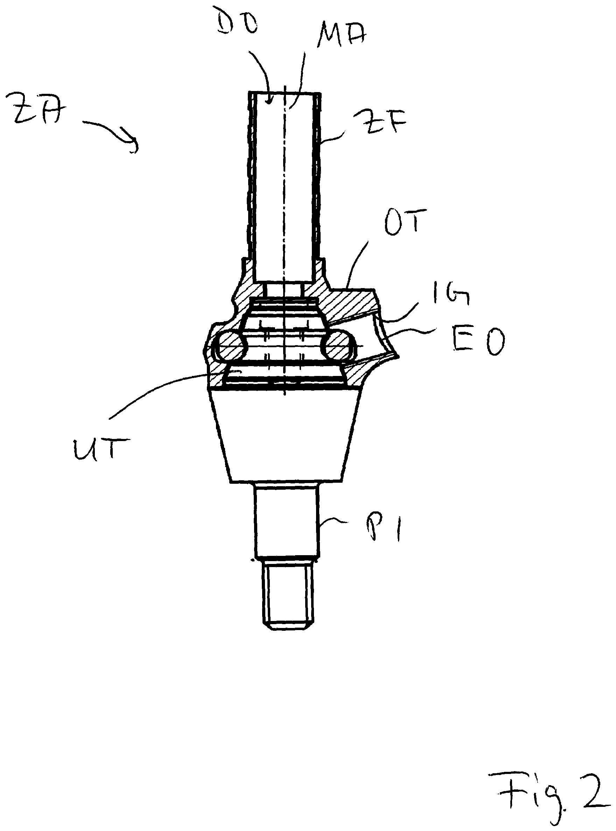

Eine weitere Ausführungsform der Erfindung ist in Fig. 2 gezeigt. Bei Fig. 2 kann es sich beispielsweise um eine Darstellung handeln, die einer entlang der Mittelachse MA gedrehten Darstellung der zahnprothetischen Anordnung ZA aus Fig. 1 entspricht. Zusätzlich zu dem bereits mittels des Halteelements HE geschaffenen Befestigungsmittels ist gemäß Fig. 2 eine erste Öffnung EO vorgesehen, die durch das Oberteil tritt. Beim Zusammenbau einer Zahnprothese besteht nun die Möglichkeit, entweder die Befestigung mittels des Halteelementes HE einzusetzen, wie in Fig. 2 gezeigt ist. Über die erste Öffnung EO kann ebenfalls eine Befestigung des Unterteils UT mit dem Oberteil OT erfolgen, wobei die erste Öffnung EO dazu vorzugsweise zylindrisch ausgebildet ist und mit einem Innengewinde IG versehen ist.

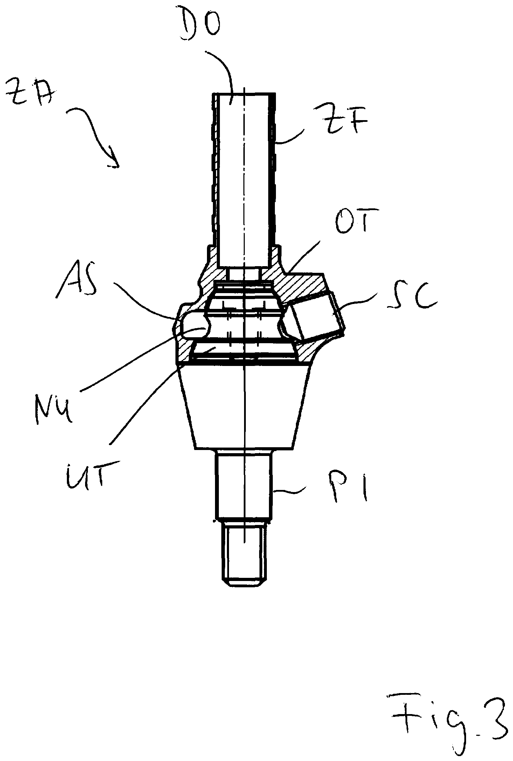

Unter Bezugnahme auf Fig. 3 ist gezeigt, dass in die erste Öffnung EO eine beispielsweise als Madenschraube ausgebildete Schraube SC in die erste Öffnung EO eingeführt werden kann, wobei vorzugsweise ein Außengewinde der Schraube SC mit dem Innengewinde IG an der zylindrischen Innenwand der ersten Öffnung EO in Eingriff gebracht wird. Sofern nun das Halteelement HE nicht verwendet wird, kann die Schraube SC in die Nut NU des Unterteils UT in Eingriff gebracht werden, so dass eine zuverlässige Befestigung des Unterteils UT mit dem Oberteil OT erfolgt. Demnach wird die Schraube SC zur Bildung einer transversalen Verschraubung genutzt.

Die zahnprothetische Anordnung ZA weist somit alternative Befestigungsmöglichkeiten auf, die wahlweise genutzt werden können. Sollte sich demnach der Behandler bzw. der Träger der Zahnprothese für eine Transversalverschraubung entscheiden, wird die Ausführungsform gemäß Fig. 3 gewählt. Falls die Halterung des Oberteils OT über die ringförmigen Halteelemente HE gebildet werden soll, wäre die Ausführungsform gemäß Fig. 1 anzuwenden. In diesem Fall kann die erste Öffnung EO auch mittels einer Verschlussmasse versiegelt werden, sofern diese später nicht gebraucht wird. Ebenso ist es möglich, beispielsweise eine Blindschraube, die nicht bis zum Halteelement HE ragt, anstelle der Schraube SC einzuführen, so dass auch später noch auf die transversale Verschraubung zurück gegriffen werden könnte.

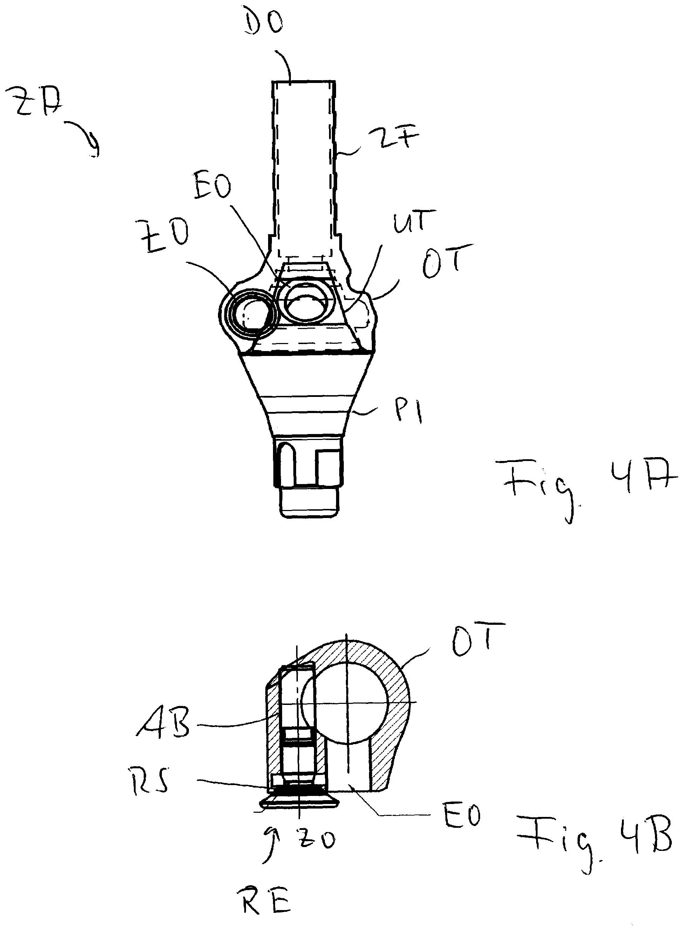

Eine weitere Ausführungsform der Erfindung ist unter Bezug auf Fig. 4 (A) gezeigt. Hier wird anstelle einer transversalen Verschraubung ein Riegelelement RE durch das Oberteil OT geführt. Das Riegelelement kann wie in Fig. 4 (A) gezeigt ist in etwa tangential bezüglich der Mittelachse des Unterteils UT in der bereits in Zusammenhang mit Fig. 1 beschriebenen Nut NU verlaufen. In einer Eingriffsstellung würde demnach ein stiftförmiger Abschnitt des Riegelelements in der Nut NU verlaufen. Es ist aber auch möglich, dass beispielsweise eine Riegelspitze in die Nut NU des Unterteils ähnlich einer transversalen Verschraubung eingreift.

Das Riegelelement RE ist in Fig. 4 (B) in einer Draufsicht nochmals detailliert dargestellt. Das Riegelelement RE weist den stiftförmigen Abschnitt AB auf, wobei es insbesondere vorgesehen ist, dass ein Rückstellelement RU so ausgebildet ist, dass das Riegelelement RE in der Eingriffsstellung verbleibt.

Hierbei ist ein Riegelelement RE in einer überwiegend radial zur Mittelachse MA ausgerichteten Riegelaufnahme in Richtung einer Riegelachse zwischen einer in Fig. 4(B) dargestellten Eingriffsstellung und einer in Richtung der Riegelachse von der Mittelachse MA weg verlagerten Lösestellung verschiebbar. Das Riegelelement RE greift mit einer Riegelspitze am stiftförmigen Abschnitt AB in die Nut NU des Unterteils UT ein und verhindert in dieser Eingriffsstellung ein Abheben des Oberteils OT von dem Unterteil UT. Das Riegelelement RE ist unter der Einrichtung einer Federkraft in Richtung der Mittelachse MA gedrückt und behält so die Eingriffsstellung von sich aus bei. Die Federkraft ist im skizzierten vorteilhaften Beispiel dadurch aufgebracht, dass in einer die Riegelachse umgebenden Nut in dem Oberteil OT ein elastisch verformbarer Ring einliegt, welcher in der Nut gegen eine Verschiebung in Richtung der Riegelachse abgestützt ist und mit einer sich von der Riegelspitze weg verjüngenden Konusfläche im Verlauf des Riegelelements RE so zusammen wirkt, dass eine Kraft auf das Riegelelement in Richtung auf die Mittelachse MA hin entsteht.

Der Ring kann aus elastischem Kunststoffmaterial bestehen oder auch durch einen Metallring, welcher auch geschlitzt sein kann, gegeben sein. Eine außerhalb der Riegelführung angeordnete Handhabe ermöglicht ein manuelles Zurückziehen des Riegelelements RE aus der in Fig. 4(B) gezeichneten Eingriffsstellung und danach ein Abheben des Oberteils von dem Unterteil. Hierbei kann der Ring durch die genannte Konusfläche des Riegelelements und Erhöhung der rückstellend wirkenden Kraft auf das Riegelelement komprimiert oder radial in einen Freiraum innerhalb der Nut aufgeweitet werden.

In einer weiteren Ausführungsform ist eine U-förmiger Bügelverriegelung, insbesondere ein Drahtbügel mit tangential bezüglich der Mittelachse MA und radial von dieser beabstandet verlaufenden seitlichen Bügelschenkeln und einem die beiden Seitenschenkel verbindenden Mittelabschnitt des U-förmigen Bügels vorgesehen. Der Bügel ist vorzugsweise zwischen einer Haltestellung und einer Lösestellung manuell oder mittels eines Werkzeugs verlagerbar. Die seitlichen Bügelschenkel können auch von einer geraden Form abweichend geformt sein, um unter elastischer Vorspannung an der Nut NU anzuliegen und so gegen unbeabsichtigtes Ausgleiten aus dem Eingriff zu verhindern. Die zweite Öffnung ZO muss bei dieser Ausführungsform selbstverständlich entsprechend gestaltet sein, um den Bügel aufnehmen zu können.

Wie Fig. 4 (B) zu entnehmen ist, ist das Riegelelement RE somit innerhalb einer zweiten Öffnung ZO angeordnet, so dass es Unterteil UT und Oberteil OT in Eingriff bringen kann. Die zweite Öffnung ZO kann beispielsweise neben der ersten Öffnung EO angeordnet sein. Dies ist insbesondere deshalb vorteilhaft, da somit ein Behandeln bei der Auswahl zwischen einem Befestigungsmittel in der ersten Öffnung EO und der zweiten Öffnung ZO immer von der gleichen Seite aus auf die zahnprothetische Anordnung ZA zugreifen kann. Im Rahmen der Erfindung ist es aber dennoch möglich, beispielsweise die zweite Öffnung 90° versetzt zur ersten Öffnung oder gegenüberliegend oder an anderen beliebigen Stellen des Oberteils OT anzuordnen.

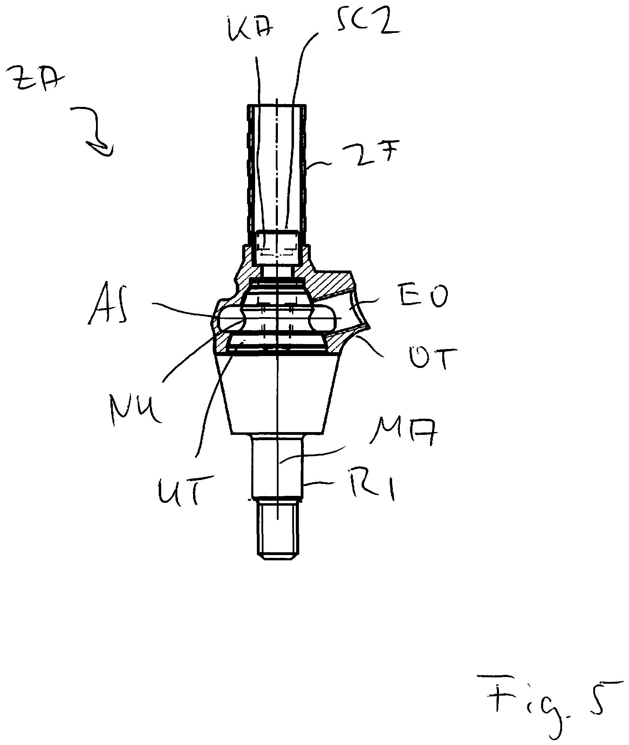

Eine weitere Befestigungsmöglichkeit wird nachfolgend unter Bezugnahme auf Fig. 5 erläutert. Das Oberteil der in Fig. 5 gezeigten Ausführungsform ist an seiner Oberseite mit einer dritten Öffnung DO versehen, die von einer zylindrischen Fortsetzung ZF umgeben ist, die entlang der Mittelachse MA ausgebildet ist. Die dritte Öffnung DO stellt somit wiederum eine Möglichkeit bereit, ein weiteres das Oberteil durchdringendes und mit dem Unterteil in Verbindung stehendes Element zur Fixierung zu verwenden. In diesem Fall ist eine weitere Schraube SC2 vorgesehen, die als sog. Okklusalverschraubung von oben auf das Oberteil OT aufgebracht wird und über ein entsprechendes Innengewinde im Unterteil UT das Oberteil OT und das Unterteil UT miteinander verbindet. Die zweite Öffnung ZO bzw. die erste Öffnung EO können, wie vorher bereits erläutert, im Falle einer Okklusalverschraubung wiederum verschlossen werden, wobei es auch nicht notwendig ist, das Halteelement zwischen Nut NU und Aussparung AS anzubringen, da Oberteil OT und Unterteil UT nun über die weitere Schraube SC2 verbunden sind.

Demnach stellt die erfindungsgemäße zahnprothetische Anordnung viele unterschiedliche Befestigungsmittel bereit, die je nach Anwendungsfall ausgewählt werden können, um bei der Befestigung zwischen Oberteil OT und Unterteil UT jeweils die optimale Eigenschaft für den Patienten bereit zu stellen. All diesen Befestigungsmitteln ist gemeinsam, dass sie lösbar sind, so dass der Träger der Zahnprothese bzw. ein Behandler in regelmäßigen Abschnitten Reinigungen der zahnprothetischen Anordnung ZA durchführen können. In Anbetracht der eingangs erwähnten Implikationen des häufig auf zahnprothetischen Anordnungen vorhandenen Biofilms ist diese Möglichkeit besonders wichtig, um die Gesundheit des Patienten zu erhalten.

Die bisher im Zusammenhang mit den Fig. 1 bis 5 beschriebenen Ausführungsformen weisen jeweils am oberen, d. h. dem Kieferimplantat PI abgewandten Seite die zylindrische Fortsetzung ZF auf. Es ist aber auch möglich, die Oberseite des Oberteils OT geschlossen auszubilden, so dass das Oberteil OT in Form einer Kappe ausgebildet ist. Die geschlossene Oberseite ist in Fig. 5 mit der gestrichelten Linie als Kappe KA angedeutet.

Eine weitere Ausführungsform der Erfindung ist in Fig. 6 gezeigt. Hier ist die zylindrische Fortsetzung ZF gegen die Mittelachse MA geneigt. Die zylindrische Fortsetzung ZF und das Oberteil OT können zusammen mit der Okklusalverschraubung durch die Schraube SC2 beispielsweise über eine Verschweißung einstückig ausgeführt sein. Demnach wird die weitere Schraube SC2 als gefangene Schraube gebildet. Eine gefangene Schraube kann auch bei den in Figuren 1 bis 5 gezeigten Ausführungsformen realisiert sein.

Die zahnprothetische Anordnung ZA nach Fig. 6 ermöglicht es, die die Zahnprothese üblicherweise durchdringende und somit eine Durchtrittsöffnung bildende zylindrische Fortsetzung ZF an eine seitliche Position der Zahnprothese zu verlagern, so dass an der dortigen Stelle beispielsweise geringere Kaukräfte wirken können. Dies ermöglicht es, eine längere Haltbarkeit der Zahnprothese gewährleisten zu können.

In einer weiteren Ausführungsform ist die zylindrische Fortsetzung ZF entlang ihrer Außenwand AW oder Innenwand IW mit einem Gewinde GE versehen, auf das die Zahnprothese aufgeschraubt werden kann. Folglich wird eine Verbindung des zahnprothetischen Aufbaus mit der zahnprothetischen Anordnung ZA geschaffen, die auf einfache und flexible Weise realisierbar ist. Das Gewinde GE kann auch bei den in Figuren 1 bis 5 gezeigten Ausführungsformen realisiert sein.

Das Halteelement HE, das Riegelelement RE und die Transversalverschraubung mittels Schraube SC sowie die okklusale Verschraubung mittels der weiteren Schraube SC2 bewirken eine axiale Andruckkraft an einer Anlagefläche an den dem Kieferimplantat zuweisenden Ende des Verbindungsabschnitts zwischen Oberteil OT und Unterteil UT.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Zahnprothetische Anordnung zur Verbindung von wenigstens einem Kieferimplantat (PI) mit einem Aufbau, welche in einem Verbindungsabschnitt (VA) über ein dem Kieferimplantat (PI) zugeordnetes Unterteil (UT) und ein dem Aufbau zugeordnetes Oberteil (OT) miteinander verbunden sind, wobei in dem Verbindungsabschnitt (VA) das Unterteil (UT) entlang einer Mittelachse (MA) in das Oberteil (OT) eingreift, das Unterteil (UT) an mehreren Anlageflächen (AF) gegen das Oberteil (OT) abgestützt ist und das Unterteil (UT) und das Oberteil (OT) miteinander über ein eine Haltekraft gegen axiales Abziehen des Oberteils (OT) vom Unterteil (OT) bewirkendes Befestigungsmittel lösbar verbunden sind, bei dem unterschiedliche Befestigungsmöglichkeiten auswählbar sind, wobei als erste Befestigungsmöglichkeit am Unterteil (UT) eine erste radial nach innen gerichtete Struktur und am Oberteil (OT) eine zweite radial nach außen gerichtete Struktur zur Aufnahme eines Halteelements (HE) vorgesehen sind und als zweite Befestigungsmöglichkeit eine transversale Verschraubung vorgesehen ist, die durch eine das Oberteil (OT) durchdringende erste Öffnung (EO) mit dem Unterteil (UT) in Verbindung steht.

2. Zahnprothetische Anordnung nach Anspruch 1, bei der als dritte Befestigungsmöglichkeit am Oberteil (OT) eine zweite Öffnung (ZO) zur Aufnahme eines Riegelelements (RE) vorgesehen ist.

3. Zahnprothetische Anordnung nach Anspruch 1 oder 2, bei der die erste Struktur als ringförmige Nut (NU), die zweite Struktur als Aussparung (AS) und das Haltelement (HE) als Ring oder Schnur ausgebildet sind.

4. Zahnprothetische Anordnung nach Anspruch 3, bei der der Ring ein gummielastisches und/oder elastisch komprimierbares Material umfasst und radial elastisch verformbar ist.

5. Zahnprothetische Anordnung nach Anspruch 2, bei der das Riegelelement (RE) einen stiftförmigen Abschnitt umfasst, der in einer Eingriffsstellung mit einer Riegelspitze in die Nut (NU) des Unterteils (UT) eingreift oder tangential bezüglich der Mittelachse (MA) des Unterteils (UT) in der Nut (NU) verläuft.

6. Zahnprothetische Anordnung nach Anspruch 5, bei der das Riegelelement (RE) als Steckriegel, Schubriegel, Schwenkriegel, Drehriegel oder U-förmige Bügelverriegelung ausgebildet ist.

7. Zahnprothetische Anordnung nach einem der Ansprüche 1 bis 6, bei der die erste Öffnung (EO) zylindrisch ausgebildet und mit einem Innengewinde (IG) versehen ist, in die eine ein Außengewinde (AG) aufweisende Schraube zur Bildung der transversalen Verschraubung einführbar ist.

8. Zahnprothetische Anordnung nach einem der Ansprüche 1 bis 7, bei der das Oberteil (OT) an seiner von dem Kieferimplantat (PI) wegweisenden Oberseite geschlossen ist.

9. Zahnprothetische Anordnung nach einem der Ansprüche 1 bis 7, bei der das Oberteil (OT) an seiner von dem Kieferimplantat (PI) wegweisenden Oberseite mit einer dritten Öffnung (DO) zur Aufnahme einer okklusalen Verschraubung als weitere Befestigungsmöglichkeit versehen ist.

10. Zahnprothetische Anordnung nach Anspruch 9, bei der die dritte Öffnung (DO) von einer zylindrischen Fortsetzung (ZF) umgeben ist, die von dem Kieferimplantat (PI) weg weist.

11. Zahnprothetische Anordnung nach Anspruch 10, bei der die zylindrische Fortsetzung (ZF) in Richtung der Mittelachse (MA) ausgebildet ist.

12. Zahnprothetische Anordnung nach Anspruch 10, bei der die zylindrische Fortsetzung (ZF) zur Mittelachse (MA), vorzugsweise um etwa 10° bis 30° insbesondere 20°, gewinkelt ist.

13. Zahnprothetische Anordnung nach einem der Ansprüche 10 bis 12, bei der die zylindrische Fortsetzung (ZF) und das Oberteil einstückig ausgeführt sind oder verschweißbar sind.

14. Zahnprothetische Anordnung nach einem der Ansprüche 10 bis 13, bei der die zylindrische Fortsetzung (ZF) entlang ihrer Außenwand oder Innenwand mit wenigstens abschnittsweise einem Gewinde (GE) versehen ist.

15. Zahnprothetische Anordnung nach den Ansprüchen 1, 2, 7 und 9, bei der das Halteelement (HE), das Riegelelement (RE) und die Transversalverschraubung sowie die okklusale Verschraubung eine axiale Andruckkraft an einer Anlagefläche (AF) an den dem Kieferimplantat (PI) zuweisenden Ende des Verbindungsabschnitts bewirken.

16. Zahnprothetische Anordnung nach einem der Ansprüche 1 bis 15, bei der die Haltekraft ohne Zerstörung von Oberteil (OT) und Unterteil (UT) überwindbar ist, um die Verbindung zwischen Oberteil (OT) und Unterteil (UT) zu lösen.

17. Zahnprothetische Anordnung nach Anspruch 16, bei der die Haltekraft ohne Zerstörung des Halteelements (HE) überwindbar ist.

## Claims

1. A dental prosthetic arrangement for connecting at least one jaw implant (PI) to a structure, the at least one jaw implant (PI) being interconnected in a connection portion (VA) via a lower part (UT) that is associated with the jaw implant (PI) and an upper part (OT) that is associated with the structure, wherein the lower part (UT) engages in the upper part (OT) along a center axis (MA) in the connection portion (VA), the lower part (UT) is supported on a plurality of contact surfaces (AF) against the upper part (OT), and the lower part (UT) and the upper part (OT) are detachably interconnected via a fastening means that exerts a retention force against axial removal of the upper part (OT) from the lower part (OT) and offers various fastening options, a first radially inwardly oriented structure being provided on the lower part (UT) and a second radially outwardly oriented structure for receiving a retaining element (HE) being provided on the upper part (OT) as a first fastening option and, as a second fastening option, a transverse screw connection being provided that is connected to the lower part (UT) by a first opening (EO) that penetrates through the upper part (OT).

2. The dental prosthetic arrangement according to claim 1, wherein a second opening (ZO) for receiving a locking element (RE) is provided on the upper part (OT) as a third fastening option.

3. The dental prosthetic arrangement according to claim 1 or 2, wherein the first structure is embodied as an annular groove (NU), the second structure as a recess (AS), and the retaining element (HE) as a ring or cord.

4. The dental prosthetic arrangement according to claim 3, wherein the ring comprises a rubber-elastic and/or elastically compressible material and is radially elastically deformable.

5. The dental prosthetic arrangement according to claim 2, wherein the locking element (RE) comprises a pin-shaped portion which, in an engagement position, engages with a locking tip in the groove (NU) of the lower part (UT) or extends tangentially in the groove (NU) relative to the center axis (MA) of the lower part (UT).

6. The dental prosthetic arrangement according to claim 5, wherein the locking element (RE) is embodied as a plug bolt, sliding bolt, swivel bolt, rotary bolt, or U-shaped bracket lock.

7. The dental prosthetic arrangement according to any of claims 1 to 6, wherein the first opening (EO) is cylindrical and provided with a female thread (IG) into which a screw having a male thread (AG is insertable in order to form the transverse screw connection.

8. The dental prosthetic arrangement according to any of claims 1 to 7, wherein the upper part (OT) is closed on its upper side facing away from the jaw implant (PI).

9. The dental prosthetic arrangement according to any of claims 1 to 7, wherein the upper part (OT) is provided on its upper side facing away from the jaw implant (PI) with a third opening (DO) for receiving an occlusal screw connection as an additional fastening option.

10. The dental prosthetic arrangement according to claim 9, wherein the third opening (DO) is surrounded by a cylindrical continuation (ZF) that faces away from the jaw implant (PI).

11. The dental prosthetic arrangement according to claim 10, wherein the cylindrical continuation (ZF) is formed in the direction of the center axis (MA).

12. The dental prosthetic arrangement according to claim 10, wherein the cylindrical continuation (ZF) is angled relative to the center axis (MA), preferably by approximately 10° to 30°, particularly by 20°.

13. The dental prosthetic arrangement according to any of claims 10 to 12, wherein the cylindrical continuation (ZF) and the upper part are integrally formed or are weldable.

14. The dental prosthetic arrangement according to any of claims 10 to 13, wherein the cylindrical continuation (ZF) is provided with a thread (GE) at least in portions along its outer wall or inner wall.

15. The dental prosthetic arrangement according to claims 1, 2, 7, and 9, wherein the retaining element (HE), the locking element (RE), and the transverse screw connection as well as the occlusal screw connection exert an axial pressing force against a contact surface (AF) on the end of the connection portion facing toward the jaw implant (PI).

16. The dental prosthetic arrangement according to any of claims 1 to 15, wherein the retention force can be overcome without destroying the upper part (OT) and lower part (UT) in order to release the connection between upper part (OT) and lower part (UT).

17. The dental prosthetic arrangement according to claim 16, wherein the retention force can be overcome without destroying the retaining element (HE).

## Revendications

1. Ensemble formant prothèse dentaire pour relier au moins un implant maxillaire (PI) à une structure, l'implant maxillaire et la structure étant reliés l'un à l'autre dans une section de liaison (VA) par l'intermédiaire d'une partie inférieure (UT) associée à l'implant maxillaire (PI) et d'une partie supérieure (OT) associée à la structure, la partie inférieure (UT) venant en prise avec la partie supérieure (OT) dans la section de liaison (VA), le long d'un axe central (MA), la partie inférieure (UT) étant en appui contre la partie supérieure (OT) au niveau de plusieurs surfaces d'appui (AF), et la partie inférieure (UT) et la partie supérieure (OT) étant reliées l'une à l'autre de manière détachable par l'intermédiaire d'un moyen de fixation exerçant une force de retenue empêchant la partie supérieure (OT) de se détacher axialement de la partie inférieure (OT), différents moyens de fixation pouvant être sélectionnés, une première structure orientée radialement vers l'intérieur est prévue comme première possibilité de fixation sur la partie inférieure (UT) et une deuxième structure orientée radialement vers l'extérieur pour recevoir un élément de retenue (HE) étant prévue sur la partie supérieure (OT), et un raccord à vis transversal étant prévu comme deuxième possibilité de fixation, lequel raccord à vis transversal est relié à la partie inférieure (UT) par une première ouverture (EO) traversant la partie supérieure (OT).

2. Ensemble formant prothèse dentaire selon la revendication 1, dans lequel une deuxième ouverture (ZO) destinée à recevoir un élément de verrouillage (RE) est prévue sur la partie supérieure (OT) comme troisième possibilité de fixation.

3. Ensemble formant prothèse dentaire selon la revendication 1 ou 2, dans lequel la première structure est réalisée sous la forme d'une rainure annulaire (NU), la seconde structure sous la forme d'un évidement (AS) et l'élément de retenue (HE) sous la forme d'un anneau ou d'un cordon.

4. Ensemble formant prothèse dentaire selon la revendication 3, dans lequel l'anneau comprend un matériau élastique et/ou élastiquement compressible et est élastiquement déformable de façon radiale.

5. Ensemble formant prothèse dentaire selon la revendication 2, dans lequel l'élément de verrouillage (RE) comprend une section en forme de broche qui, dans une position de prise, vient en prise, avec une pointe de verrouillage, avec la rainure (NU) de la partie inférieure (UT), ou s'étend dans la rainure (NU), tangentiellement par rapport à l'axe central (MA) de la partie inférieure (UT).

6. Ensemble formant prothèse dentaire selon la revendication 5, dans lequel l'élément de verrouillage (RE) est réalisé sous la forme d'un verrou de fixation, d'un verrou coulissant, d'un verrou pivotant, d'un verrou rotatif ou d'un verrouillage à étrier en forme de U.

7. Ensemble formant prothèse dentaire selon l'une des revendications 1 à 6, dans lequel la première ouverture (EO) est cylindrique et pourvue d'un filetage interne (IG), une vis présentant un filetage externe (AG) pouvant être insérée dans ladite ouverture pour former le raccord à vis transversal.

8. Ensemble formant prothèse dentaire selon l'une des revendications 1 à 7, dans lequel la partie supérieure (OT) est fermée sur son côté supérieur opposé à l'implant maxillaire (PI).

9. Ensemble formant prothèse dentaire selon l'une des revendications 1 à 7, dans lequel la partie supérieure (OT) est pourvue d'une troisième ouverture (DO) sur son côté supérieur opposé à l'implant maxillaire (PI), laquelle troisième ouverture est destinée à recevoir un raccord à vis occlusal comme possibilité de fixation supplémentaire.

10. Ensemble formant prothèse dentaire selon la revendication 9, dans lequel la troisième ouverture (DO) est entourée d'un prolongement cylindrique (ZF) opposé à l'implant maxillaire (PI).

11. Ensemble formant prothèse dentaire selon la revendication 10, dans lequel le prolongement cylindrique (ZF) est réalisé dans la direction de l'axe central (MA).

12. Ensemble formant prothèse dentaire selon la revendication 10, dans lequel le prolongement cylindrique (ZF) est incliné par rapport à l'axe central (MA), de préférence d'environ 10 à 30°, en particulier de 20°.

13. Ensemble formant prothèse dentaire selon l'une des revendications 10 à 12, dans lequel le prolongement cylindrique (ZF) et la partie supérieure sont réalisés en une seule pièce ou sont soudables.

14. Ensemble formant prothèse dentaire selon l'une des revendications 10 à 13, dans lequel le prolongement cylindrique (ZF) est pourvu d'un filetage (GE) au moins dans certaines régions, le long de sa paroi externe ou interne

15. Ensemble formant prothèse dentaire selon les revendications 1, 2, 7 et 9, dans lequel l'élément de retenue (HE), l'élément de verrouillage (RE) et le raccord à vis transversal ainsi que le raccord à vis occlusal appliquent une force de pression axiale sur une surface d'appui (AF) à l'extrémité de la section de liaison orientée vers l'implant maxillaire (PI).

16. Ensemble formant prothèse dentaire selon l'une des revendications 1 à 15, dans lequel la force de retenue peut être contrée sans que la partie supérieure (OT) et la partie inférieure (UT) ne soient détériorées, de façon à desserrer la liaison entre la partie supérieure (OT) et la partie inférieure (UT).

17. Ensemble formant prothèse dentaire selon la revendication 16, dans lequel la force de retenue peut être contrée sans que l'élément de retenue (HE) ne soit détérioré.
